# EUROPEAN PATENT SPECIFICATION

(11) **EP 2 618 510 B1**
(45) Date of publication and mention of the grant of the patent: **23.10.2019**
(21) Application number: 13155937.9
(22) Date of filing: 24.10.2008
(51) Int. Cl.: H04L 1/00

(54) **Control of up link common E-DCH transmission**
Steuerung einer gemeinsamen E-DCH-Aufwärtsstreckenübertragung
Commande de transmission E-DCH commun en liaison ascendante

(30) Priority: 20.12.2007 US 15308 P
(43) Date of publication of application: 24.07.2013
(62) Divisional of application: 08864759.9
(73) Proprietor: Telefonaktiebolaget LM Ericsson (publ), 164 83 Stockholm (SE)
(72) Inventor: Wager, Stefan, 02360 ESPOO (FI)
(74) Representative: Ericsson

(56) References cited:
- EP-A- 1 235 402
- WO-A-2004/004194
- NOKIA CORPORATION ET AL: "Contention Resolution with MAC-e", 3RD GENERATION PARTNERSHIP PROJECT (3GPP) , 29 October 2007 (2007-10-29), XP050137157, MOBILE COMPETENCE CENTRE ; 650, ROUTE DES LUCIOLES ; F-06921 SOPHIA-ANTIPOLIS CEDEX ; FRANCE Retrieved from the Internet: URL:http:\\www.3gpp.org\ftp\tsg_ran\WG2_RL 2\TSGR2_60\Docs\r2-074624.zip

## Description

### TECHNICAL FIELD

The present invention relates to a method and system for managing transmission of Up Link common E-DCH transmissions in a radio system such as a Wide Band Code Division Multiple Access (WCDMA) radio system.

### BACKGROUND

In release 8 of the third generation partnership project (3GPP), work is ongoing to improve the uplink performance in the so called CELL_FACH state. CELL_FACH is a Radio Resource Control (RRC) state in which the User Equipment (UE) is known on cell level (i.e. has a cell id), has a layer 2 connection but no dedicated physical layer resource associated therewith. Instead, common physical layer resources are shared between different User Equipments in the CELL_FACH state.

One uplink improvement planned for future cellular radio systems is the activation also in CELL_FACH of the Enhanced Dedicated Channel (E-DCH) physical channel, which is normally used as a dedicated physical layer channel in CELL_DCH state with one separate E-DCH resource allocated per user. This can be performed by using a pool of E-DCH resources that can be temporarily assigned to a user in the CELL_FACH state. Such a pool of E-DCH resources can be termed common E-DCH resources. E-DCH resources are conventionally managed by a Radio Network Controller (RNC). However the pool of common E-DCH resources is to be managed by the radio base station NodeB to speed up the allocation of resources by not having to involve the RNC in the allocation procedure. The common E-DCH configurations are broadcasted to UEs located in a cell.

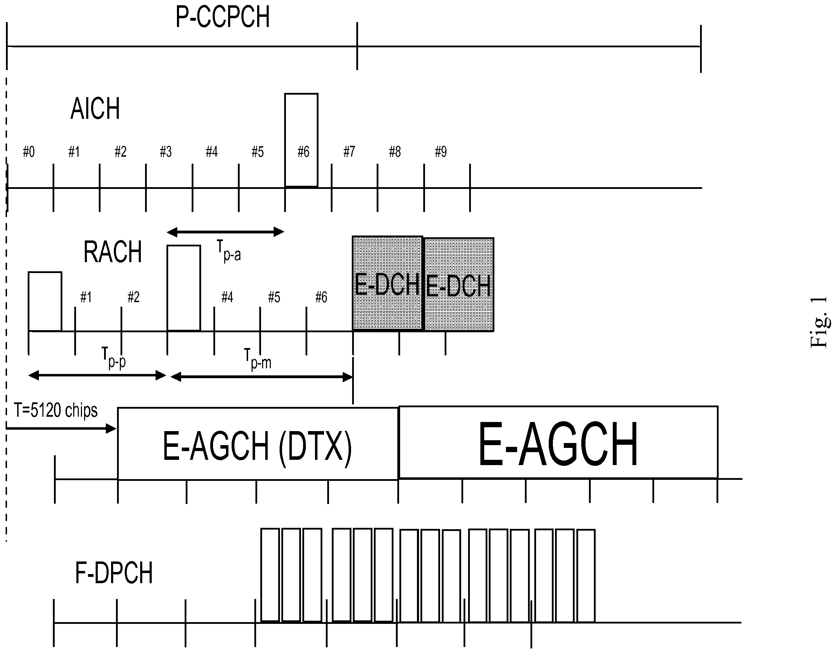

In Fig. 1 common E-DCH transmission in CELL_FACH state is shown. The procedure to access the common E-DCH channel in CELL_FACH starts in a manner corresponding to Rel-99 Random Access Channel (RACH) transmission, with preamble power ramping using randomly selected preamble signatures. Having detected the preamble, the NodeB acknowledges reception using an Acquisition Indication Channel (AICH) sequence. It also informs the UE which common E-DCH resource it has assigned to the UE.

A common E-DCH resource is defined by:
an Up -Link (UL) scrambling code
an E-DCH Radio Network Temporary Identifier (E-RNTI)
a Fractional - Dedicated Physical CHannel (F-DPCH) code and timing offset E-DCH Absolute Grant Channel (E-AGCH)/ E-DCH Relative Grant Channel (E-RGCH)/ E-DCH HARQ Acknowledgement Indicator CHannel (E-HICH) codes and signatures, and High Speed Dedicated Physical Control Channel (HS-DPCCH) parameters such as power offsets and Channel Quality Indicator (CQI).

One characteristic of the common E-DCH transmission is that at the point the base station NodeB assigns the common E-DCH resources and starts receiving the Up Link (UL) E-DCH transmission, it is not aware of the identity of the UE. As a result. two users selecting the same preamble in the same access slot will cause a collision. There are 16 preambles to choose from and 15 access slots during 20 ms to choose from. If two users transmit the same preamble in the same access slot, and the base station NodeB acknowledges one of them on AICH, both UEs will start Up Link transmission. This will lead to non-optimal operation as both are transmitting, but the base station NodeB will only be able to decode one User Equipment or nothing of what is being transmitted.

To solve this problem, UEs having a RRC connection will put their Radio Network Temporary Identifier (RNTI) in the MAC header on the common E-DCH. This will enable the NodeB to read the RNTI and thus uniquely identify the user transmitting. The NodeB then echoes the detected RNTI back to on a downlink control channel. Both transmitting UEs will read the RNTI, but only the one detecting its own RNTI will continue the Up Link common E-DCH transmission.

A problem with the above solution is that it only works for UEs having an RRC connection. Users entering the system from idle state will need special attention. One solution that could be envisaged is to use a Core Network Identifier for these users. However, that would increase protocol overhead, and also complexity as protocols have to support both radio network and core network identifiers for contention resolution.

Hence there is a need for an improved method and system for managing transmission of Up Link common E-DCH transmissions.

### SUMMARY

It is an object of the present invention to provide an improved method and system for managing of Up Link common E-DCH transmissions.

This object and others are obtained by the methods and radio system nodes as set out in the appended claims, which define the scope of protection of the invention. Thus, by adding a checksum to each layer 3 message to check the correctness of the message, the risk that Layer 2 assembles message parts from different UEs into one corrupt message, such as a RRC or CN message that is then delivered to higher layers is avoided.

The inventors have recognized that for users in an idle state, the common E-DCH transmission is used to transmit only initial RRC and possibly initial CN messages. This transmission typically only lasts for a very short time. It has been observed to typically last for <100 ms, after which the common E-DCH resource is again released. Also the probability of preamble collision is expected to be very low, in the order of 10⁻³, i.e. typically less than one on one thousand.

A result from the above observations can be that since collisions will be with a low probability and only during a limited time, contention resolution may not be necessary for users in idle state from a physical layer point of view. However, colliding transmissions can still cause problems on higher layers, as assembly of Radio Resource Control (RRC) and Non Access Stratum (NAS) messages on Layer 2 (L2) may fail. There is a risk that Layer 2 assembles parts from different UEs into one corrupt message, such as a Radio Resource Control (RRC) or Core Network (CN) message that is then delivered to higher layers. This may cause unexpected effects as higher layers start to process the messages. Such a problem needs to be avoided. To solve this problem, a checksum to each Layer 3 (L3) message, e.g. (RRC or NAS) is added to check the correctness of the message.

Hereby the need for transmitting a long Core Network (CN) Identity (ID) for contention resolution on Layer 2 for UEs in idle mode is removed. As a result performance of the cellular radio network will be improved.

### BRIEF DESCRIPTION OF THE DRAWINGS

The present invention will now be described in more detail by way of non-limiting examples and with reference to the accompanying drawings, in which:
- Fig. 1 is a view illustrating common E-DCH transmission in CELL_FACH state,
- Fig. 2 is a general view of a cellular radio system,
- Fig. 3 is a view illustrating different message from different UEs assembled into one corrupt message on Level 2 that is then delivered to higher layers,
- Figs. 4a - 4c are views of a header of a Level 3 message in accordance with some exemplary embodiments of the present invention, and
- Fig. 5 is a flowchart illustrating steps performed when adding a checksum to a level 3 message.

### DETAILED DESCRIPTION

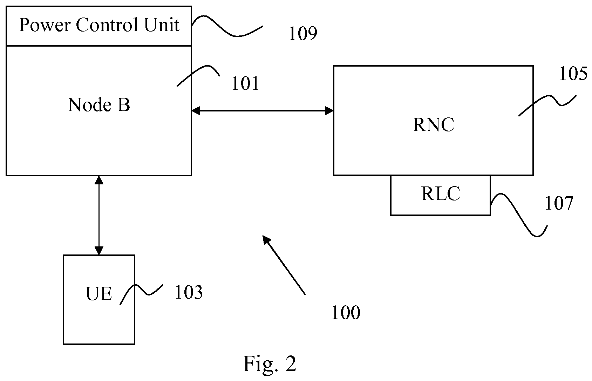

In Fig. 2 a general view of a WCDMA system 100 is depicted. The system 100 comprises a base station (Node B) 101. The base station 101 serves a number of mobile terminals, usually termed User Equipment (UE) 103, located within the area covered by the base station 101. The base station 101 is also connected to a radio network controller node (RNC) 105. The RNC 105 typically also includes a Radio link controller node (RLC) 107. The RLC 107 is among other things responsible for detecting errors. The system 100 also typically comprises a power control unit 109, which preferably is co-located or an integral part of the base station 101.

In release 6, the WCDMA specification is extended with a new uplink transport channel, the Enhanced Dedicated Channel (E-DCH). The enhanced uplink (EUL) is a natural complement to High Speed Downlink Packet Access (HSDPA) for high-performance packet-data applications.

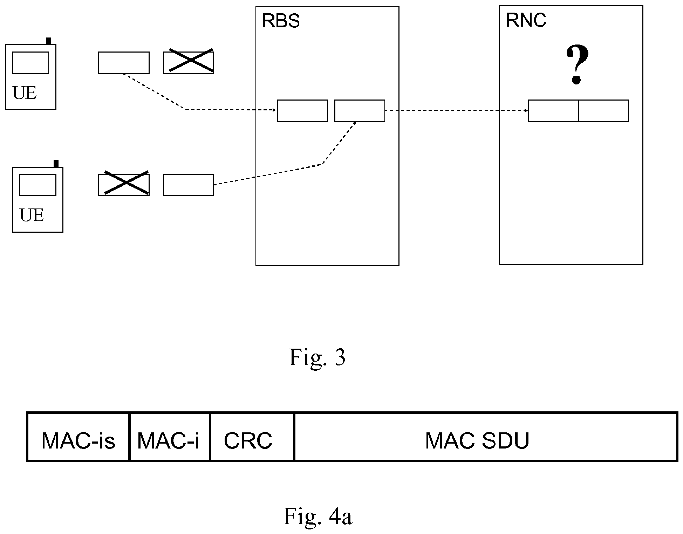

In Fig. 3 colliding transmissions from two different User Equipments in idle state is illustrated. Colliding transmissions from different UEs can cause problems on higher layers, as assembly of Radio Resource Control (RRC) and Non Access Stratum (NAS) messages on Layer 2 (L2) may fail. Hence there is a risk that Layer 2 assembles parts from different UEs into one corrupt message, such as a Radio Resource Control (RRC) or a Core Network (CN) message that is then delivered to higher layers. This may cause unexpected effects as higher layers start to process the messages. Such a problem therefore needs to be avoided. To solve this problem, a checksum to each Layer 3 (L3) message, e.g. RRC or NAS is added to check the correctness of the message.

In accordance with the present invention a checksum is added to each layer 3 message to check the correctness of the message when common E-DCH transmission are transmitted when the radio base station is not aware of the identity of the UE. For WCDMA, this applies to uplink transmission on the Common Control Channel (CCCH) logical channel. Hereby it can be prevented that colliding transmissions from different UEs on the common E-DCH channel can cause problems on higher layers.

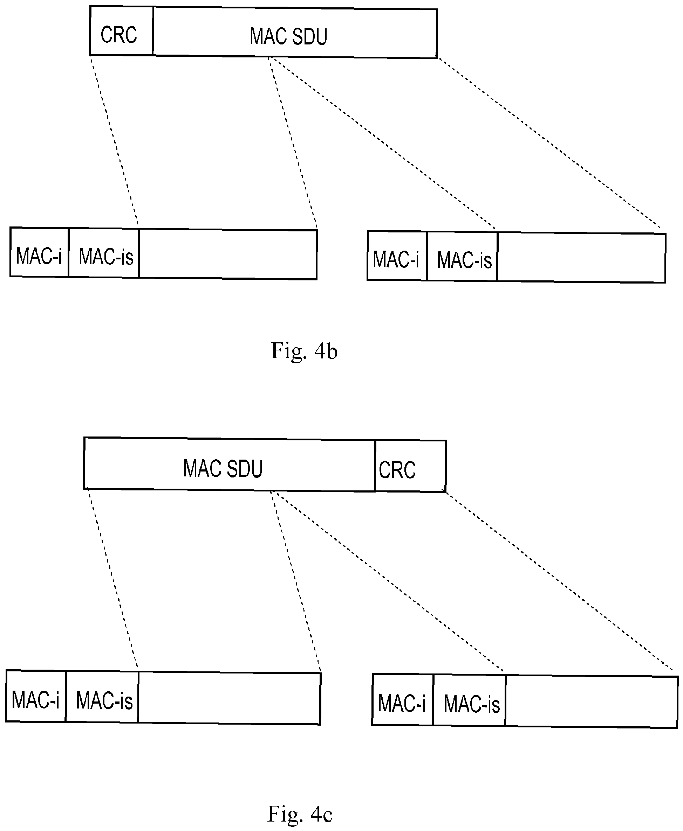

There are a few different options on how to append the checksum to a message such as a Radio Resource Control (RRC) or Non Access Stratum (NAS) message. The checksum can be on Media Access Control (MAC), Radio Link Control (RLC) or Radio Resource Control (RRC). Adding the checksum on MAC has the benefit that an error in the reassembly can be detected already in the base station, and thus the corrupt message does not need to be transmitted up to the RNC. In 3GPP Rel-8, MAC segmentation is included to support flexible RLC sizes. In accordance with one embodiment a similar MAC header structure as for the downlink MAC-ehs is used. For example the MAC can be split in two sublayers, called MAC-i and MAC-is. The segmentation and reassembly functionality is handled by the MAC-is sublayer, terminated in the C-RNC. The checksum can in accordance with one embodiment be a 16 bit Cyclic Redundancy Checksum (CRC) calculated over the MAC SDU. The Checksum can also be calculated over another unit such as a MAC-c PDU. In Fig. 4a an exemplary location of a checksum is depicted. In Fig. 4a the checksum is located after the fields of MAC-i and MAC-is and before the MAC SDU in the MAC header for Common Control Channel (CCCH). Other locations are also possible such as depicted in Fig. 4b and Fig. 4c. These show the two possible alternatives for CRC location in case the MAC SDU is segmented before transmission over the radio interface. In this case there are one MAC-i and one MAC-is header for each segment. In the MAC receiver, the MAC-i and MAC-is headers are first removed and the MAC SDU assembled. Then the CRC is calculated and checked with the appended CRC bits.

If MAC segmentation is not available, the checksum can be added on either RLC level or RRC level, in which case the processing of the checksum can be performed by the RNC, thereby easing the load on the Radio Base Station (RBS).

In accordance with one embodiment the checksum can be a 16 or 24 bit Cyclic Redundancy Check (CRC) or any other suitable number of bits. In case the checksum is transmitted on the RRC level, it is be possible to use the Integrity Protection checksum calculated with a default HFN and User ID.

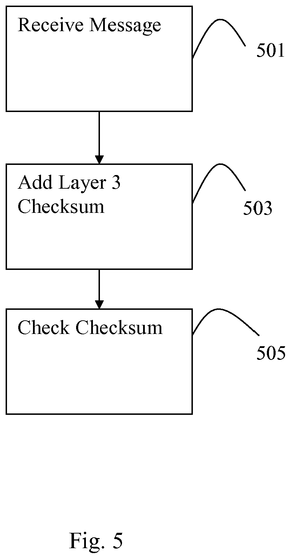

In Fig. 5 a flowchart illustrating steps performed when forming and receiving a message on level 2 when receiving messages from at least one User Equipment in idle state is shown. Because two users can select the same preamble in the same access slot thereby causing a collision, there is a risk that Layer 2 assembles messages from different users. To enable identification of such erroneously assembled messages a checksum is added to each MAC SDU in a step 501 in each User Equipment. Then, in a step 503 messages from at least one User Equipment is received as a common E-DCH transmission. Thereupon, in a step 505, the checksum is checked to determine the correctness of the message. The determination in step 505 can be performed either locally in the radio base station NodeB or in the Radio Network Controller (RNC).

Using the method and system as described herein will remove the need for transmitting a long Core Network (CN) Identity (ID) for contention resolution on Layer 2 for UEs in idle mode. As a result performance of the cellular radio network will be improved.

## Claims

1. A method in a radio base station or radio network controller, which method is for use in a Wideband Code Division Multiple Access, WCDMA, radio system and for detecting that a message has been correctly formed by layer 2 from parts generated by a single User Equipment, UE, in an idle state and transmitted on an Enhanced Dedicated CHannel, E-DCH, **characterized by:**
- obtaining said message and a checksum regarding layer 3 of the message, and
- checking said correctness of the message formed by layer 2 based on the checksum regarding layer 3.

2. The method according to claim 1, wherein the message is a Non Access Stratum, NAS, message and the checksum is appended to this message.

3. The method according to claim 1, wherein the message is a Radio Resource Control, RRC, message and the checksum is appended to this message.

4. The method according to any one of claims 1-3, wherein the method is in the radio base station and the radio base station obtains the message by:
- receiving said parts and the checksum, and
- forming said message from the received parts.

5. The method according to claim 4, wherein the base station receives the checksum in a Media Access Control, MAC, header.

6. The method according to claim 4, wherein the base station receives the checksum appended to the beginning or the end of a MAC-d Packet Data Unit, PDU.

7. The method according to any one of claims 1-3, wherein the method is in the radio network controller and the radio network controller obtains the message by:
- receiving the message and the checksum from a radio base station.

8. A radio base station (101) or a radio network controller, for use in a Wideband Code Division Multiple Access, WCDMA, radio system and for detecting that a message has been correctly formed by layer 2 from parts generated by a single User Equipment, UE, (103) in an idle state and transmitted on an Enhanced Dedicated CHannel, E-DCH, **characterized by** being configured to:
obtain said message and a checksum regarding layer 3 of the message, and
check said correctness of the message formed by layer 2 based on the checksum regarding layer 3.

9. The radio base station or radio network controller according to claim 8, wherein the message is a Non Access Stratum, NAS, message and the checksum is appended to this message.

10. The radio base station or radio network controller according to claim 8, wherein the message is a Radio Resource Control, RRC, message and the checksum is appended to this message.

11. The radio base station according to any one of claims 8-10, wherein the radio base station is configured to obtain the message by being configured to:
receive said parts and the checksum, and
form said message from the received parts.

12. The radio base station according to claim 10, wherein the radio base station is configured to receive the checksum in a Media Access Control, MAC, header.

13. The radio base station according to claim 10, wherein the radio base station is configured to receive the checksum appended to the beginning or the end of a MAC-d Packet Data Unit, PDU.

14. The radio network controller according to any one of claims 8-10, wherein the radio network controller is configured to obtain the message by being configured to receive the message from a radio base station.

## Patentansprüche

1. Verfahren in einer Funkbasisstation oder einer Funknetzsteuerung, wobei das Verfahren für die Verwendung in einem Wideband Code Division Multiple Access, WCDMA, Funksystem vorgesehen ist und zur Erkennung, dass eine Nachricht durch die Schicht 2 aus Teilen, die von einer einzigen Benutzereinrichtung, UE, in einem Leerlaufzustand erzeugt wurden, korrekt zusammengesetzt wurde und auf einem erweiterten dedizierten Kanal, E-DCH, übertragen wurde, vorgesehen ist, **gekennzeichnet durch:**
- Erhalten der Nachricht und einer Prüfsumme betreffend die Schicht 3 der Nachricht, und
- Prüfen der Korrektheit der durch die Schicht 2 zusammengesetzten Nachricht auf Grundlage der Prüfsumme betreffend die Schicht 3.

2. Verfahren nach Anspruch 1, wobei die Nachricht eine Non Access Stratum-, NAS-, Nachricht ist und die Prüfsumme an diese Nachricht angehängt ist.

3. Verfahren nach Anspruch 1, wobei die Nachricht eine Radio Resource Control, RRC-, Nachricht ist und die Prüfsumme an diese Nachricht angehängt ist.

4. Verfahren nach einem der Ansprüche 1-3, wobei das Verfahren in der Funkbasisstation ist und die Funkbasisstation die Nachricht durch Folgendes erhält:
- Empfangen der Teile und der Prüfsumme, und
- Zusammensetzen der Nachricht aus den empfangenen Teilen.

5. Verfahren nach Anspruch 4, wobei die Basisstation die Prüfsumme in einem Media Access Control-, MAC-, Header empfängt.

6. Verfahren nach Anspruch 4, wobei die Basisstation die Prüfsumme empfängt, die am Anfang oder am Ende einer MAC-c Packet Data Unit, PDU, angehängt ist.

7. Verfahren nach einem der Ansprüche 1-3, wobei das Verfahren in der Funknetzsteuerung ist und die Funknetzsteuerung die Nachricht durch Folgendes erhält:
- Empfangen der Nachricht und der Prüfsumme von einer Funkbasisstation.

8. Funkbasisstation (101) oder Funknetzsteuerung, zur Verwendung in einem Wideband Code Division Multiple Access, WCDMA, Funksystem und zur Erkennung, dass eine Nachricht durch die Schicht 2 aus Teilen, die von einer einzigen Benutzereinrichtung, UE (103), in einem Leerlaufzustand erzeugt wurden, korrekt zusammengesetzt wurde und auf einem erweiterten dedizierten Kanal, E-DCH, übertragen wurde, **dadurch gekennzeichnet, dass** sie für Folgendes ausgelegt ist:
Erhalten der Nachricht und einer Prüfsumme betreffend die Schicht 3 der Nachricht, und Prüfen der Korrektheit der durch die Schicht 2 zusammengesetzte Nachricht auf Grundlage der Prüfsumme betreffend die Schicht 3.

9. Funkbasisstation oder Funknetzsteuerung nach Anspruch 8, wobei die Nachricht eine Non Access Stratum-, NAS-, Nachricht ist und die Prüfsumme an diese Nachricht angehängt ist.

10. Funkbasisstation oder Funknetzsteuerung nach Anspruch 8, wobei die Nachricht eine Radio Resource Control-, RRC-, Nachricht ist und die Prüfsumme an diese Nachricht angehängt ist.

11. Funkbasisstation nach einem der Ansprüche 8-10, wobei die Funkbasisstation ausgelegt ist, um die Nachricht dadurch zu erhalten, dass sie zum Folgenden ausgelegt ist:
Empfangen der Teile und der Prüfsumme, und
Zusammensetzen der Nachricht aus den empfangenen Teilen.

12. Funkbasisstation nach Anspruch 10, wobei die Funkbasisstation zum Empfangen der Prüfsumme in einem Media Access Control-, MAC-, Header ausgelegt ist.

13. Funkbasisstation nach Anspruch 10, wobei die Funkbasisstation zum Empfangen der Prüfsumme, die am Anfang oder am Ende einer MAC-c Packet Data Unit, PDU, angehängt ist, ausgelegt ist.

14. Funknetzsteuerung nach einem der Ansprüche 8-10, wobei die Funknetzsteuerung ausgelegt ist, um die Nachricht dadurch zu erhalten, dass sie zum Empfangen der Nachricht von einer Funkbasisstation ausgelegt ist.

## Revendications

1. Procédé dans une station de base radio ou un contrôleur de réseau radio, ledit procédé étant à utiliser dans un système radio d'accès multiple par répartition de code à large bande, WCDMA, et détecter qu'un message a été formé correctement par la couche 2 à partir de parties générées par un seul équipement utilisateur, UE, dans un état inactif et transmis sur un canal dédié amélioré, E-DCH, **caractérisé par** :
- l'obtention dudit message et d'une somme de contrôle portant sur la couche 3 du message, et
- la vérification de ladite exactitude du message formé par la couche 2 sur la base de la somme de contrôle portant sur la couche 3.

2. Procédé selon la revendication 1, dans lequel le message est un message de couche non d'accès, NAS, et la somme de contrôle est annexée à ce message.

3. Procédé selon la revendication 1, dans lequel le message est un message de contrôle de ressources radio, RRC, et la somme de contrôle est annexée à ce message.

4. Procédé selon l'une quelconque des revendications 1-3, dans lequel le procédé est dans la station de base radio et la station de base radio obtient le message par :
- la réception desdites parties et de la somme de contrôle, et
- la formation dudit message à partir des parties reçues.

5. Procédé selon la revendication 4, dans lequel la station de base reçoit la somme de contrôle dans un en-tête de contrôle d'accès au support, MAC.

6. Procédé selon la revendication 4, dans lequel la station de base reçoit la somme de contrôle annexé au début ou à la fin d'une unité de données de paquet, PDU, MAC-d.

7. Procédé selon l'une quelconque des revendications 1-3, dans lequel le procédé est dans le contrôleur de réseau radio, et le contrôleur de réseau radio obtient le message par :
- la réception du message et de la somme de contrôle depuis la station de base radio.

8. Station de base radio (101) ou un contrôleur de réseau radio, à utiliser dans un système radio d'accès multiple par répartition de code à large bande, WCDMA, et détecter qu'un message a été formé correctement par la couche 2 à partir de parties générées par un seul équipement utilisateur, UE, (103) dans un état inactif et transmis sur un canal dédié amélioré, E-DCH, **caractérisée en ce qu'**elle est configurée pour :
obtenir ledit message et une somme de contrôle portant sur la couche 3 du message, et vérifier ladite exactitude du message formé par la couche 2 sur la base de la somme de contrôle portant sur la couche 3.

9. Station de base radio ou contrôleur de réseau radio selon la revendication 8, dans laquelle le message est un message de couche non d'accès, NAS, et la somme de contrôle est annexée à ce message.

10. Station de base radio ou contrôleur de réseau radio selon la revendication 8, dans laquelle le message est un message de contrôle de ressources radio, RRC, et la somme de contrôle est annexée à ce message.

11. Station de base radio selon l'une quelconque des revendications 8-10, dans laquelle la station de base radio est configurée pour obtenir le message en étant configurée pour :
recevoir lesdites parties et la somme de contrôle, et
former ledit message à partir des parties reçues.

12. Station de base radio selon la revendication 10, dans laquelle la station de base radio est configurée pour recevoir la somme de contrôle dans un en-tête de contrôle d'accès au support, MAC.

13. Station de base radio selon la revendication 10, dans laquelle la station de base radio est configurée pour recevoir la somme de contrôle annexée au début ou à la fin d'une unité de données de paquet, PDU, MAC-d.

14. Contrôleur de réseau radio selon l'une quelconque des revendications 8-10, dans lequel le contrôleur de réseau radio est configurée pour obtenir le message en étant configurée pour recevoir le message depuis la station de base radio.
